# EUROPEAN PATENT SPECIFICATION

(11) **EP 2 124 412 B1**
(45) Date of publication and mention of the grant of the patent: **09.08.2017**
(21) Application number: 08009263.8
(22) Date of filing: 20.05.2008
(51) Int. Cl.: H04L 29/06

(54) **SYSTEM AND METHOD FOR CARRYING OUT COMMUNICATION BETWEEN A SERVER AND A USER EQUIPMENT**
SYSTEM UND VERFAHREN ZUR AUSFÜHRUNG VON KOMMUNIKATION ZWISCHEN EINEM SERVER UND EINEM BENUTZERGERÄT
SYSTÈME ET PROCÉDÉ POUR EFFECTUER UNE COMMUNICATION ENTRE UN SERVEUR ET ÉQUIPEMENT D'UTILISATEUR

(43) Date of publication of application: 25.11.2009
(73) Proprietor: Vodafone Holding GmbH, 40213 Düsseldorf (DE)
(72) Inventor: Rodrigues, Bruno, D-40219 Düsseldorf (DE)
(74) Representative: Jostarndt Patentanwalts-AG

(56) References cited:
- JP-A- 8 321 878
- US-A- 5 805 932
- US-A1- 2003 184 813
- US-A1- 2006 195 464

## Description

### Field of the invention

The invention relates to a communication system and method for carrying out communication between a server and at least one user equipment.

The invention furthermore relates to the server.

### Background of the invention

The invention relates to a communication system and a method for communication, wherein information is exchanged between a user equipment and a central server.

The invention is especially useful in all communication systems, wherein communication bandwidth is limited.

US 2006/195464 A1 discloses a dynamic data delivery performed by a server system responsible for transmitting data over a network. The server automatically determines when to transmit the data and whether to compress the data. Factors considered by the server system are available network bandwidth, current bandwidth costs, expected processing times and the available storage capability of the user device and the time at which the user device expects to use the data.

US 2003/0184813 A1 discloses a method for transferring print data from a host computer to a printer connected to the host, where a transfer rate determiner of the host determines the data transfer rate of the interface between the host and the printer. The transferred data might be transferred compressed or uncompressed. The total data process time for the compressed data and the data transfer time for the non-compressed data are compared to determine the most efficient print data transfer scheme.

Different scenarios exist, which relate to the problem of limited bandwidth for a communication between a user equipment and a server. Problems of limited bandwidth are especially dominant in areas, where high quality content with a certain amount of data volume is transferred to a communication network with a limited bandwidth. Especially important networks with limited bandwidth are mobile communication systems.

It is known to increase the functionality of user equipments, especially mobile user equipments as for example mobile telephones by downloading content, especially applications.

This occurs for example through a platform for mobile communication systems of the third generation as it is described in the specification (TS 23.057 Version 6.2.0, September 2003) of the third generation partnership project (3GPP).

Download of content occurs for example according to a communication between the user equipment and a content server, which is for example based on the hypertext transfer protocol (HTTP). According to this communication the user equipment sends a request (HTTP-request) of a desired application to the content server.

According to information contained in a header of the request (request-header) the content server selects a content to be transferred to the user equipment.

Mobile wireless networks have higher latencies than fixed networks, due to the laws of physics.

### Summary of the invention

It is an object of the present invention to allow a more efficient usage of bandwidth in a communication between a server and at least one user equipment.

According to the invention, this object is achieved by a communication system according to claim 1, by a method according to claim 8, by a user equipment according to claim 10 and by a server according to claim 12.

Preferred embodiments of the invention are described in the application text and are also object of the sub-claims.

The invention proposes a communication system for carrying out a communication between a server and at least one user equipment, and more specific a communication system capable of carrying out a plurality of communications between the server and several user equipments.

Furthermore the invention enables a transfer of objects of different size, including multimedia content. Request handling is optimized.

The invention enables a method with a communication in which the server always sends information to the user equipment. This makes use of full bandwidth.

The current invention can operate with known technologies as well as with further technologies.

According to an embodiment of the invention content is transferred in different objects. Objects according to the invention are data entities which can be adapted to several purposes. Examples of these objects are pictures, data files, software modules and even executable computer programs.

Preferred embodiments of the invention increase the bandwidth efficiency on the mobile network by adapting a compression of the objects according to the available bandwidth.

Preferably, the bandwidth efficiency is combined with a usage efficiency of the mobile user equipment (also called device). For example the efficiency of the device depends on the CPU power, a system performance (e.g. Java VM) of the device, and/or a compression level used by the server and/or content size.

The invention implies the idea to compress some, most or even all of the objects that can be uncompressed by a user equipment quicker than the time for the transfer of the uncompressed object, respectively the difference between the transfer time of the uncompressed object and the compressed object.

Different ways exist for compressing objects.

Preferred embodiments of the invention include different compression levels within the same compression mechanism.

The invention includes a variety of compressing respectively decompressing means for data objects.

The standard compression mechanisms for HTTP are gzip and deflate (http://tools.ietf.org/html/rfc1952 and http://tools.ietf.org/html/rfc1950), which are pretty similar for this context.

However, the invention includes other, non-standard compression mechanisms. For example bzip2 is more efficient than gzip for larger pieces of data)

It is especially useful to reduce the data size of the objects by compressing them. This has the advantage, that the reverse function: Decompressing in the user equipment can be carried out fast and with high reliability.

The reverse function for retrieving the compressed object is called in the context of this application decompressing respectively uncompressing. Formulations relating to uncompressing also relate to decompressing and vice versa.

The invention is based on the concept that the server calculates the time the user equipment would use for uncompressing a compressed filed. This calculated time for unzipping the zipped file is compared with the time to transfer the file. If the time for unzipping the file by the mobile user equipment is significantly lower than the time for transferring the file, it is useful to zip the file and transfer the zipped file to the mobile user equipment.

As zipping is an especially preferred way for compressing the object, all references to compressing especially relate to a zipping of the object.

However, parts referring to a zipping of the object also apply to other ways of compressing the object, if the compressing allows a reduction of a time to transfer the object.

A quicker availability of the object at the user equipment is achieved, if a ratio of less than 100 %, for e.g. a ratio of 90 % between the transfer time and the unzipping time exists. This means, that an object, for e.g. a file is zipped, if the expected time for unzipping the object the mobile user equipment is smaller than 100 %, especially smaller than 95 % or smaller than 90 % of the transferred time of the unzipped object.

A further improvement of the invention takes into account, that a transfer of the compressed object also takes time. Taking into account this aspect leads to an embodiment of the invention, in which a decision if the object is compressed is based on the comparison between a time for uncompressing the compressed object with the time difference between a time for transfer the uncompressed object with a time for transfer to the compressed object.

Taking the difference between the time for a transfer of the uncompressed object and the time for transfer the compressed object into account is especially useful in cases where the size reduction between the uncompressed format and the compressed format of the object is relative small.

If only a small data reduction, especially data reduction of less than 10 % can be obtained it is preferably to decide that the object is not compressed.

The reason for this is that the time gained by a transfer of the smaller compressed object is lower than the time for uncompressing the object at the user equipment. Such a decision may be influenced by the data density or data type of the object. For e.g. Adobe acrobat texts have a high density which is only a little reduced if the file (object) is zipped.

Examples for an influence of a data type for the decision, if an object is compressed or not compressed are described below:
Binary files usually don't compress (e.g. images) and won't even be attempted to be compressed, but anything with text is highly compressible.

Preferred examples of data objects to be compressed are text or markup (x)html pages. The conditional compression is relevant because if the content is just some dozen bytes, the compression overhead won't compensate the compression of a couple of bytes.

An example is a list of contacts in a structured format (XML or VCard), where there will be a lot of repeated words (name, email, url, etc.) for each contact, and this is highly compressible via standard gzip/deflate mechanisms.

If the compression is significantly high as it is especially the case if the reduction by the compression is higher than for e.g. 80, 85 or even 90 % of the original size of the object, it is suitable to take into account a comparison which the time for the transfer of the object in the uncompressed state and the time to uncompress an object which has been received by the user equipment in a compressed state.

It is especially useful to base a decision whether the object is compressed or not compressed on a comparison between the time for the transfer of the uncompressed object with a time uncompressing a compressed object and the time difference between the transfer time of the compressed object and the uncompressed object.

The server can obtain the information about calculating times for unzipping the file by various ways.

It is especially useful, that the server contains a mapping table which allows calculating times for an uncompressing object at the user equipment and for transferring the object to the user equipment. The mapping table is especially useful, if a service request of the mobile user equipment contains data about the type and/or calculation abilities of the mobile user equipment.

The invention proposes a communication system for carrying out a communication between a server and at least one user equipment. Furthermore the invention comprises a server and a method of communication between the server and the user equipment.

Preferably the communication system, most preferably the server or a device connectable to the server contains a database with information about at least one decompressing ability of the user equipment.

It is even more advantageous that the communication system, respectively the server or the device capable of interacting with the server contains information about the decompressing abilities of a plurality of user equipments.

This allows to base the decision, if a compression of the object is performed on the decompressing ability of the user equipment which had requested the object.

As decompressing abilities of different user equipments are different, the communication system, the method the server according to the invention imply a high flexibility in the decision whether the compression occurs or not.

According to an embodiment of the invention, the communication system, a logical node, the server and/or the mobile user equipment contain a means for determining available bandwidth for a transfer of the object.

This allows to calculate a first time which is necessary to transfer the uncompressed object and/or a second time which is necessary for transferring the compressed object.

This embodiment is especially useful, if a bandwidth is variable. This is for e.g. the case, if a communication network integrated into the communication system uses different parameters of data transfer. For e.g. it is possible to integrate a lot of different data transfer rates into the communication network. Preferred data transfer rates range from conventional GSM systems to UMTS and/or WLAN.

According to a preferred embodiment of the invention the user equipment contains a means for opening the connection to the server.

The invention contains several means for opening the connection. For example the user equipment (client) opens the connection to the server via HTTPS or via direct connection.

According to a preferred embodiment of the communication system, the method and the server, the communication system contains a selector which is capable of selecting objects which can be transferred from the server to the user equipment, wherein the selector is equipped in a way, that the determined available bandwidth is used as a parameter in the selection process.

The user equipment sends requests to the server wherein at least some requests contain a demand for transferring an object, that the server receives the requests, that the server provides, that the objects are stored in a queue, and that the objects are pushed to the user equipment in a streaming connection.

Preferably, the server contains a means for compressing the object with first compressing parameter and compressing means for compressing the object with a second compressing parameter.

In this case the server preferably contains a means for evaluating the time for a transfer an object compressed according to the first parameter and a means for evaluating the time for transfer of an object according to the second parameter.

The server contains a means which allows comparing times, especially comparing a time for transferring an uncompressed object, with a time for transferring a compressed object or with more than one compressed version of the object.

According to a preferred embodiment of the invention a constant flow of objects from the server to the user equipment is enabled.

According to a further improvement of the invention the flow of objects is optimized in a way that a maximum of available bandwidth is used.

It is especially advantageous that the communication system contains a selector which is capable of selecting objects which can be transferred from the server to the user equipment, wherein the selector is equipped in a way that the determined available bandwidth is used as a parameter for the selection.

An especially preferred embodiment of the invention relates to a method for carrying out a communication between a server and at least one user equipment. This method is characterized in that the user equipment sends a request to the server, wherein the request contains a demand for transferring an object, and that the user equipment sends information about its type and its uncompressing abilities to the server for calculating the time for uncompressing the object at the user equipment, that the server receives the request, that the server provides the object, that the server calculates a time for a transfer of the object to the user equipment and that the server furthermore calculates a time for uncompressing the object at the user equipment, that the server furthermore decides whether the object is compressed or not compressed and wherein this decision is influenced by information about the calculated time for uncompressing the object at the user equipment and the time for transferring the object to the user equipment.

The invention furthermore comprises a server which is capable of interacting in the communication system. The server contains a compressing means for compressing the object, that the server furthermore contains a means for calculating a time for a transfer of the object to the user equipment and for a time for uncompressing the object at the user equipment and wherein the server furthermore contains a means for comparing the times, and wherein the server is capable of the deciding, whether the object should be compressed or not compressed for making the object available for the data transfer based on the comparison between the time for the transfer of the uncompressed object with the time uncompressing a compressed object and the time difference between the transfer time of the compressed object and the uncompressed object. The server contains a means for receiving requests of at least one user equipment, wherein at least some requests contain a demand for transferring an object and the server contains means for calculating the time for uncompressing the object at the user equipment based on the information about type and uncompressing abilities of the user equipment, and that the server is capable of interacting with means for enabling a connection between the server and the user equipment.

The invention includes different ways for implementing compression technologies.

The invention includes a variety of suitable parameters for compressing the object.

The standard http gzip/deflate mechanism has one parameter defining a compression level from 1 to 9, where 1 is less compression but faster compressing and decompressing, and 9 is the opposite.

According to a preferred embodiment of the invention the compression applies especially to objects with text based content, and is worthless to apply to precompressed content like images or real zip archive files.

One especially suitable parameter for the selection of compression parameters of the object to be transferred is information about available bandwidth for the transfer of the objects.

This embodiment has the advantage that the efficiency of the usage of the bandwidth is further increased.

These aforementioned and other aspects and advantages of the invention will be apparent from and elucidated with reference to the embodiments of the invention described hereinafter.

### Brief description of the drawings

Reference to preferred embodiments of the invention will be made by way of example to the accompanying drawings.
- Fig. 1: shows a schematic overview of a communication system, wherein a mobile user equipment is connected through a network with a server and
- Fig. 2: shows a schematic representation of request, response and data handling processes according to a preferred embodiment of the invention.

### Detailed description of embodiments

The description of the embodiments shows implementations of a data transfer which consists of a method for optimizing content delivery from a server platform to a mobile device connected via a wireless network, aiming at improving the delivery of multiple small content over high latency lines, whilst maintaining compatibility with common OpCo's network topologies (e.g. default browser APN and Wap GW), and leveraging existing standards (HTTP & multipart/mixed).

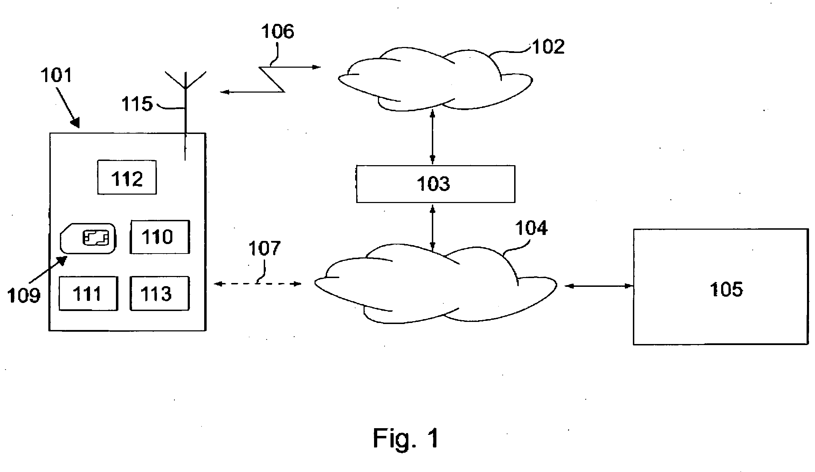

Fig. 1 shows a schematic representation of communication system and mobile user equipment according to the invention.

For those skilled in the art it is clear that the described functions are a selection of many means for carrying out the invention and implementing it.

Fig. 1 shows in a schematic overview a mobile user equipment 101. The mobile user equipment 101 is for example a mobile cellular telephone. The mobile user equipment 101 is connected with a server 105. Preferably an interactive connection between the mobile user equipment 101 and the server 105 is realized through a communication network. For example the network comprises a telecommunication network 102. The telecommunication network 102 relates the mobile user equipment through an air interface. The air interface 106 is for example a GSM network (GSM: Global System for Mobile Communications) or a UMTS network (UMTS: Universal Mobile Telecommunication System).

The telecommunication network 102 is connected through a gateway 103 with a data network 104. The data network 104 is for example the internet or an intranet. The server 105 is connected to the data network 104.

Information for registering the user equipment in the telecommunication network 102 are stored in the user identification module 109. The user identification module is for example supplied by an operator of the telecommunication network 102. The user identification module 109 is for example a chip card, which is in relation with GSM networks known as SIM card (SIM: Subscriber Identification Module).

In relation with UMTS networks the user identification module 109 is called USIM card (USIM: Universal Subscriber Identification Module). The preferably mobile user equipment 101 further comprises a processor 110, which is connected to the user identification module 109.

The user equipment 101 may comprise further elements, for example a keypad or a keyboard 111, a graphical user interface 112 and a storage 113. Preferably the storage 113 comprises permanent and non-permanent storage areas.

The user equipment 101 preferably contains an antenna 115, which physically allows a connection to the telecommunication network 102 over the air interface 106.

The server 105 is for example a content server which is operated by a content provider. The content can be downloaded through the network 102, 103, 104 into the user equipment 101.

The content is transferred as objects. Examples of these objects are all types of data sets, as for example text data, graphical information as photographs or films as well as program modules. The program modules may be executable, especially executable on the user equipment 101 or in relation to the user equipment 101.

The server 105 is preferably operated by a content provider, which uses the server for making the content available.

Preferably the content is available over the network 102, 103, 104.

According to a preferred embodiment the user equipment 101 may download the content from the server 105 by using the network 102, 103, 104.

The above mentioned program modules may have the format of program code for software applications. These software applications are executable by the user equipment 101, especially with a utilization of an application runtime environment.

If HTTP is used for carrying out requests, a demand for content, respectively for objects with embedded content, HTTP requests are generated with a request header and a data area. The data area contains especially information specific content (information) which is requested.

The request header especially contains information about the configuration of the user equipment 101.

It is preferable that the requests for obtaining content (objects) from the server are related with identification data. The identification data may be contained in the header of the request.

The invention can be implemented with various communication systems, user equipments, servers, networks operating them and with a variety of operating parameters.

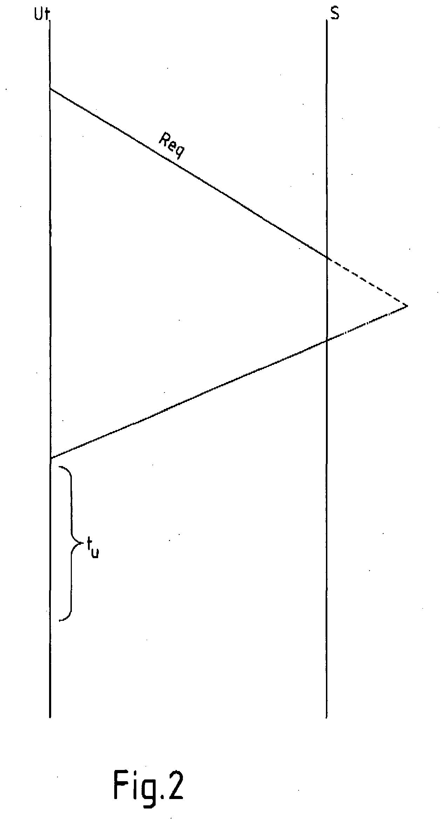

Fig. 2 shows a schematic representation of request, response and data handling processes according to a preferred embodiment of the invention.

Fig. 2 contains a diagram for a communication between a user equipment UE and a server S.

The user equipment sends a request for obtaining an object to the server. The user equipment may be any device that is capable for interacting with a user, for e.g. a computer, a mobile telephone or other type of user equipment as a mobile playstation or a household equipment as for e.g. a refrigerator or a stove.

For e.g. the user equipment is a mobile telephone as described before according to figure 1.

The server also may have different properties. A variety of servers allows an access of user equipment and different types of data handling, data storage and data transmission. It is obvious, that small servers and single work stations are also usable as more complex servers allowing for e.g. complex calculations. The server may be installed at different positions in the communication system. For e.g. it is possible, that the server is separated from the telecommunication and network and for e.g. operated by a content provider. However, within in the scope of the invention other operating parameters of the server are also included. For e.g. it is possible, that the server operates a logical node within the telecommunication network.

For those skilled in the art, it is obvious, that the server may comprise one or more computers and/or calculating units and that therefore functions of the server may be separated to different calculating units. Therefore the meaning of the word "the server" should in no way be limited to a special implementation of a computer. Especially the invention is not related to servers operated on a single computer but may comprise different types of server architecture and interconnect ability of a server functionality.

The server contains means for receiving requests of the user equipment. At least one request contains a demand for transferring an object.

The communication system, especially the user or a storage means connected to the user is capable of making the object available for a data transfer to the user equipment.

Furthermore the server contains a compressing means for compressing the object. An example of such compressing means is a program module capable of zipping the object.

The server furthermore contains means for calculating a transfer time needed for transferring the object to the user equipment and for calculating a time necessary for an uncompressing of the object.

In an even more advantageous implementation of the invention the server contains a means for compressing the object with a first compressing parameter and a compressing means for compressing the object with a second parameter. The means for compressing may be a different unit. However, the means can be realized at a single unit, for e.g. as a program module capable of compressing in at least two different ways and/or with at least two different compression rates.

Preferably the server contains means for evaluating (for e.g. calculating) a time for an object compressed according to the first parameter and for evaluating (calculating) a time for transfer of the object compressed according to the second parameter.

According to an embodiment of the invention with at least two different compression parameters it is advantageous to further include a means for calculating the time for uncompressing the object compressed according to the first parameter.

According to preferred embodiments of the invention one or more means may influence a decision, if an object is compressed or not, respectively may influence the decision about a selection of compressing parameters.

According to a preferred embodiment of the invention it is useful to integrate available battery capacity as a parameter in the decision.

In order to explain adavantages of embodiments of the invention, an example for an object and the available time for a transfer of the object and a decompression of the object is explained below:

In this example the object is a text response composed of a contact list with contact data and several repeat keys (e.g. "name=", "email=", etc.), consisting of 10KB, compresses to 2803 bytes using gzip level 1, and 2493 bytes using compression level 9. Decompressing such packet in a Java ME device, using java based gzip decompression (if native gunzip is not available) has an difference (average) of 0.5s for gzip -1 to 0.8s for gzip -9. Thus 400 bytes less of traffic means 0.3sec more time needed on the device, plus respective battery consumption.

A further aspect of the invention relates to a communication system, a method, a user equipment and a server, wherein the user equipment is configured in that it contains a means for transmitting information about properties of a means for calculating a time for uncompressing transmitted objects to the server S, 105.

Preferably, the user equipment contains a means for transmitting an information about available battery capacity and/or information about battery consumption for uncompressing transmitted objects to the server S, 105.

## Claims

1. Communication system for carrying out a communication between a server (S, 105) and at least one user equipment (UE, 101), wherein the communication system is capable of making an object available for a data transfer to the user equipment, wherein the server (S, 105) contains furthermore a compressing means for compressing the object, that the server (S, 105) furthermore contains a means for calculating a time for a transfer of the object to the user equipment (UE, 101) and for a time for uncompressing the object at the user equipment (UE, 101) and wherein the server (S, 105) furthermore contains a means for comparing the times, and wherein the server (S, 105) is capable of the deciding, whether the object should be compressed or not compressed for making the object available for the data transfer based on the comparison between the time for the transfer of the uncompressed object with the time uncompressing a compressed object and the time difference between the transfer time of the compressed object and the uncompressed object,
**characterized in that,**
the server (S, 105) contains a means for receiving requests of the user equipment (UE, 101), that at least one request contains a demand for transferring the object and that the user equipment (UE, 101) sends information about its type and its uncompressing abilities to the server (S, 105) for calculating the time for uncompressing the object at the user equipment (UE, 101).

2. The communication system according to claim 1,
**characterized in that,**
it contains a data base with information about at least one uncompressing ability of the user equipment (UE, 101).

3. The communication system according to claim 2,
**characterized in that,**
the database includes information about the uncompressing ability of a plurality of user equipments (UE, 101).

4. The communication system according to any of the preceding claims,
**characterized in that,**
the server (S, 105) contains a means for determining available bandwidth for the object transfer.

5. The communication system according to any of the preceding claims,
**characterized in that,**
the server (S, 105) contains a means for compressing the object with a first compressing parameter and a compressing means for compressing the object with a second compressing parameter, that the server (S, 105) contains a means for evaluating the time for transfer of the object compressed according to the first parameter and a means for evaluating the time for a transfer of the object according to the second parameter and that the server furthermore contains means for comparing the transfer times.

6. The communication system according to any of the preceding claims,
**characterized in that,**
a user equipment (UE, 101) contains a means for opening a connection to the server (S, 105).

7. The communication system according to any of the preceding claims,
**characterized in that,**
it contains a selector which is capable of selecting objects which can be transferred from the server (S, 105) to the user equipment (UE, 101), wherein the selector is equipped in a way, that the determined available bandwidth is used as a parameter for the selection.

8. Method for carrying out a communication between a server (S, 105) and at least one user equipment (UE, 101), wherein the server (S, 105) provides an object to the user equipment, that the server (S, 105) calculates a time for a transfer of the object to the user equipment (UE, 101) and that the server (S, 105) furthermore calculates a time for uncompressing the object at the user equipment (UE, 101), that the server (S, 105) furthermore decides whether the object should be compressed or not compressed for making the object available for the data transfer based on the comparison between the time for the transfer of the uncompressed object with the time uncompressing a compressed object and the time difference between the transfer time of the compressed object and the uncompressed object
**characterized in that,**
the user equipment (UE, 101) sends a request to the server (S, 105), that the server (S, 105) receives the request, wherein the request contains a demand for transferring an object, and that the user equipment (UE, 101) sends information about its type and its uncompressing abilities to the server (S, 105) for calculating the time for uncompressing the object at the user equipment (UE, 101).

9. The method according to claim 8,
**characterized in that,**
the objects are not compressed if only a data reduction of less than 10% can be obtained.

10. Server (S, 105), capable of interacting in a communication system and capable of interacting with means for enabling a streaming connection between the server (S, 105) and at least one user equipment (UE, 101), wherein the server (S, 105) contains a compressing means for compressing the object, that the server (S, 105) furthermore contains a means for calculating a time for a transfer of the object to the user equipment (UE, 101) and for a time for uncompressing the object at the user equipment (UE, 101) and wherein the server (S, 105) furthermore contains a means for comparing the times, and wherein the server (S, 105) is capable of the deciding, whether the object should be compressed or not compressed for making the object available for the data transfer based on the comparison between the time for the transfer of the uncompressed object with the time uncompressing a compressed object and the time difference between the transfer time of the compressed object and the uncompressed object,
**characterized in that,**
the server (S, 105) contains means for receiving requests of the user equipment (UE, 101) and information about its type and its uncompressing abilities, wherein at least some requests contain a demand for transferring an object to the user equipment and the server (S, 105) contains means for calculating the time for uncompressing the object at the user equipment (UE, 101) based on the information about type and uncompressing abilities of the user equipment (UE, 101).

## Patentansprüche

1. Kommunikationssystem zum Ausführen einer Kommunikation zwischen einem Server (S, 105) und wenigstens einem Teilnehmergerät (UE, 101), wobei das Kommunikationssystem in der Lage ist, ein Objekt für eine Datenübertragung an das Teilnehmergerät zur Verfügung zu stellen, wobei der Server (S, 105) darüber hinaus ein Komprimierungsmittel zum Komprimieren des Objekts enthält, wobei der Server (S, 105) darüber hinaus ein Mittel zum Berechnen einer Zeit für eine Übertragung des Objekts zu dem Teilnehmergerät (UE, 101) und einer Zeit zum Dekomprimieren des Objekts bei dem Teilnehmergerät (UE, 101) enthält, und wobei der Server (S, 105) darüber hinaus ein Mittel zum Vergleichen der Zeiten enthält, und wobei der Server (S, 105) in der Lage ist, auf der Grundlage des Vergleichs zwischen der Zeit für die Übertragung des unkomprimierten Objekts mit der Zeit zum Dekomprimieren eines komprimierten Objekts und der Zeitdifferenz zwischen der Übertragungszeit des komprimierten Objekts und der des unkomprimierten Objekts zu entscheiden, ob das Objekt komprimiert oder nicht komprimiert werden sollte, um das Objekt für die Datenübertragung zur Verfügung zu stellen,
**dadurch gekennzeichnet, dass**
der Server (S, 105) ein Mittel zum Empfangen von Anforderungen des Teilnehmergeräts (UE, 101) enthält, wobei wenigstens eine Anforderung eine Forderung zur Übertragung des Objekts enthält und wobei das Teilnehmergerät (UE, 101) Informationen über seinen Typ und seine Dekomprimierungsfähigkeiten an den Server (S, 105) sendet, um die Zeit zum Dekomprimieren des Objekts bei dem Teilnehmergerät (UE, 101) zu berechnen.

2. Kommunikationssystem nach Anspruch 1,
**dadurch gekennzeichnet, dass**
es eine Datenbank mit Informationen über wenigstens eine Dekomprimierungsfähigkeit des Teilnehmergeräts (UE, 101) enthält.

3. Kommunikationssystem nach Anspruch 2,
**dadurch gekennzeichnet, dass**
die Datenbank Informationen über die Dekomprimierungsfähigkeit mehrerer Teilnehmergeräte (UE, 101) enthält.

4. Kommunikationssystem nach einem der vorhergehenden Ansprüche,
**dadurch gekennzeichnet, dass**
der Server (S, 105) ein Mittel zum Bestimmen der verfügbaren Bandbreite für die Objektübertragung enthält.

5. Kommunikationssystem nach einem der vorhergehenden Ansprüche,
**dadurch gekennzeichnet, dass**
der Server (S, 105) ein Mittel zum Komprimieren des Objekts mit einem ersten Komprimierungsparameter und ein Komprimierungsmittel zum Komprimieren des Objekts mit einem zweiten Komprimierungsparameter enthält, wobei der Server (S, 105) ein Mittel zum Bewerten der Zeit zur Übertragung des in Übereinstimmung mit dem ersten Parameter komprimierten Objekts und ein Mittel zum Bewerten der Zeit für eine Übertragung des in Übereinstimmung mit dem zweiten Parameter komprimierten Objekts enthält, und wobei der Server darüber hinaus ein Mittel zum Vergleichen der Übertragungszeiten enthält.

6. Kommunikationssystem nach einem der vorhergehenden Ansprüche,
**dadurch gekennzeichnet, dass**
ein Teilnehmergerät (UE, 101) ein Mittel zum Öffnen einer Verbindung mit dem Server (S, 105) enthält.

7. Kommunikationssystem nach einem der vorhergehenden Ansprüche,
**dadurch gekennzeichnet, dass**
es eine Auswahleinrichtung enthält, die in der Lage ist Objekte auszuwählen, die von dem Server (S, 105) zu dem Teilnehmergerät (UE, 101) übertragen werden können, wobei die Auswahleinrichtung auf eine Weise ausgestattet ist, dass die bestimmte verfügbare Bandbreite als ein Parameter für die Auswahl verwendet wird.

8. Verfahren zum Ausführen einer Kommunikation zwischen einem Server (S, 105) und wenigstens einem Teilnehmergerät (UE, 101), wobei der Server (S, 105) ein Objekt für das Teilnehmergerät bereitstellt, wobei der Server (S, 105) eine Zeit für eine Übertragung des Objekts zu dem Teilnehmergerät (UE, 101) berechnet und wobei der Server (S, 105) darüber hinaus eine Zeit zum Dekomprimieren des Objekts bei dem Teilnehmergerät (UE, 101) berechnet, wobei der Server (S, 105) darüber hinaus auf der Grundlage des Vergleichs zwischen der Zeit für die Übertragung des unkomprimierten Objekts mit der Zeit zum Dekomprimieren eines komprimierten Objekts und der Zeitdifferenz zwischen der Übertragungszeit des komprimierten Objekts und der des unkomprimierten Objekts entscheidet, ob das Objekt komprimiert oder nicht komprimiert werden sollte, um das Objekt für die Datenübertragung zur Verfügung zu stellen,
**dadurch gekennzeichnet, dass**
das Teilnehmergerät (UE, 101) an den Server (S, 105) eine Anforderung sendet, wobei der Server (S, 105) die Anforderung empfängt, wobei die Anforderung eine Forderung zur Übertragung eines Objekts enthält und wobei das Teilnehmergerät (UE, 101) Informationen über seinen Typ und seine Dekomprimierungsfähigkeiten an den Server (S, 105) sendet, um die Zeit zum Dekomprimieren des Objekts bei dem Teilnehmergerät (UE, 101) zu berechnen.

9. Verfahren nach Anspruch 8,
**dadurch gekennzeichnet, dass**
die Objekte nicht komprimiert werden, falls nur eine Datenverringerung von weniger als 10 % erhalten werden kann.

10. Server (S, 105), der in der Lage ist, in einem Kommunikationssystem zusammenzuwirken, und in der Lage ist, mit Mitteln zum Aufbauen einer Streaming-Verbindung zwischen dem Server (S, 105) und wenigstens einem Teilnehmergerät (UE, 101) zusammenzuwirken, wobei der Server (S, 105) ein Komprimierungsmittel zum Komprimieren des Objekts enthält, wobei der Server (S, 105) darüber hinaus ein Mittel zum Berechnen einer Zeit für eine Übertragung des Objekts zu dem Teilnehmergerät (UE, 101) und einer Zeit zum Dekomprimieren des Objekts bei dem Teilnehmergerät (UE, 101) enthält und wobei der Server (S, 105) darüber hinaus ein Mittel zum Vergleichen der Zeiten enthält, und wobei der Server (S, 105) in der Lage ist, auf der Grundlage des Vergleichs zwischen der Zeit für die Übertragung des unkomprimierten Objekts mit der Zeit zum Dekomprimieren eines komprimierten Objekts und der Zeitdifferenz zwischen der Übertragungszeit des komprimierten Objekts und der des unkomprimierten Objekts zu entscheiden, ob das Objekt komprimiert oder nicht komprimiert werden sollte, um das Objekt für die Datenübertragung zur Verfügung zu stellen,
**dadurch gekennzeichnet, dass**
der Server (S, 105) ein Mittel zum Empfangen von Anforderungen des Teilnehmergeräts (UE, 101) und von Informationen über seinen Typ und seine Dekomprimierungsfähigkeiten enthält, wobei wenigstens einige Anforderungen eine Forderung zur Übertragung eines Objekts zu dem Teilnehmergerät enthalten, und wobei der Server (S, 105) ein Mittel zum Berechnen der Zeit zum Dekomprimieren des Objekts bei dem Teilnehmergerät (UE, 101) auf der Grundlage der Informationen über den Typ und die Dekomprimierungsfähigkeiten des Teilnehmergeräts (UE, 101) enthält.

## Revendications

1. Système de communication pour exécuter une communication entre un serveur (S, 105) et au moins un équipement utilisateur (UE, 101), dans lequel le système de communication est capable de rendre un objet disponible pour un transfert de données vers l'équipement utilisateur, dans lequel le serveur (S, 105) contient en outre un moyen de compression pour compresser l'objet, que le serveur (S, 105) contient en outre un moyen pour calculer un temps pour un transfert de l'objet vers l'équipement utilisateur (UE, 101) et pour un temps de décompression de l'objet sur l'équipement utilisateur (UE, 101) et dans lequel le serveur (S, 105) contient en outre un moyen pour comparer les temps, et dans lequel le serveur (S, 105) est capable de décider si l'objet doit être compressé ou non compressé pour rendre l'objet disponible pour le transfert de données en se basant sur la comparaison entre le temps pour le transfert de l'objet décompressé avec le temps de décompression d'un objet compressé et la différence de temps entre le temps de transfert de l'objet compressé et l'objet décompressé,
**caractérisé en ce que**
le serveur (S, 105) contient un moyen pour recevoir des requêtes de l'équipement utilisateur (UE, 101), qu'au moins une requête contient une demande de transfert de l'objet et que l'équipement utilisateur (UE, 101) envoie des informations sur son type et ses capacités de décompression au serveur (S, 105) pour calculer le temps de décompression de l'objet sur l'équipement utilisateur (UE, 101).

2. Système de communication selon la revendication 1,
**caractérisé en ce qu'**il contient une base de données avec des informations sur au moins une capacité de décompression de l'équipement utilisateur (UE, 101).

3. Système de communication selon la revendication 2,
**caractérisé en ce que** la base de données comprend des informations sur la capacité de décompression d'une pluralité d'équipements utilisateurs (UE, 101).

4. Système de communication selon l'une quelconque des revendications précédentes,
**caractérisé en ce que** le serveur (S, 105) contient un moyen de détermination de la largeur de bande disponible pour le transfert d'objet.

5. Système de communication selon l'une quelconque des revendications précédentes,
**caractérisé en ce que** le serveur (S, 105) contient un moyen pour compresser l'objet avec un premier paramètre de compression et un moyen de compression pour compresser l'objet avec un second paramètre de compression, que le serveur (S, 105) contient un moyen pour évaluer le temps de transfert de l'objet compressé selon le premier paramètre et un moyen pour évaluer le temps d'un transfert de l'objet selon le second paramètre et que le serveur contient en outre un moyen pour comparer les temps de transfert.

6. Système de communication selon l'une quelconque des revendications précédentes,
**caractérisé en ce qu'**un équipement utilisateur (UE, 101) contient un moyen pour ouvrir une connexion vers le serveur (S, 105).

7. Système de communication selon l'une quelconque des revendications précédentes,
**caractérisé en ce qu'**il contient un sélecteur qui est capable de sélectionner des objets qui peuvent être transférés du serveur (S, 105) vers l'équipement utilisateur (UE, 101), dans lequel le sélecteur est équipé de façon à que la largeur de bande disponible déterminée soit utilisée en tant que paramètre pour la sélection.

8. Procédé destiné à l'exécution d'une communication entre un serveur (S, 105) et au moins un équipement utilisateur (UE, 101), dans lequel le serveur (S, 105) fournit un objet à l'équipement utilisateur, que le serveur (S, 105) calcule un temps un temps pour un transfert de l'objet vers l'équipement utilisateur (UE, 101) et que le serveur (S, 105) calcule en outre un temps de décompression de l'objet sur l'équipement utilisateur (UE, 101), que le serveur (S, 105) décide en outre si l'objet doit être compressé ou non compressé pour rendre l'objet disponible pour le transfert de données en se basant sur la comparaison entre le temps pour le transfert de l'objet décompressé avec le temps de décompression d'un objet compressé et la différence de temps entre le temps de transfert de l'objet compressé et l'objet décompressé,
**caractérisé en ce que**
l'équipement utilisateur (UE, 101) envoie une requête au serveur (S, 105), que le serveur (S, 105) reçoit la requête, dans lequel la requête contient une demande de transfert d'un objet et que l'équipement utilisateur (UE, 101) envoie des informations sur son type et ses capacités de décompression au serveur (S, 105) pour calculer le temps de décompression de l'objet sur l'équipement utilisateur (UE, 101).

9. Procédé selon la revendication 8, **caractérisé en ce que** les objets ne sont pas compressés si seule une réduction des données inférieure à 10 % peut être obtenue.

10. Serveur (S, 105) capable d'interagir dans un système de communication et capable d'interagir avec un moyen pour permettre une connexion en streaming entre le serveur (S, 105) et au moins un équipement utilisateur (UE, 101), dans lequel le serveur (S, 105) contient un moyen de compression pour compresser l'objet, que le serveur (S, 105) contient en outre un moyen pour calculer un temps pour un transfert de l'objet vers l'équipement utilisateur (UE, 101) et pour un temps de décompression de l'objet sur l'équipement utilisateur (UE, 101) et dans lequel le serveur (S, 105) contient en outre un moyen pour comparer les temps, et dans lequel le serveur (S, 105) est capable de décider si l'objet doit être compressé ou non compressé pour rendre l'objet disponible pour le transfert de données en se basant sur la comparaison entre le temps pour le transfert de l'objet décompressé avec le temps de décompression d'un objet compressé et la différence de temps entre le temps de transfert de l'objet compressé et l'objet décompressé,
**caractérisé en ce que**
le serveur (S, 105) contient un moyen pour recevoir des requêtes de l'équipement utilisateur (UE, 101) et des informations sur son type et ses capacités de décompression, dans lequel au moins certaines requêtes contiennent une demande de transfert d'un objet vers l'équipement utilisateur et que le serveur (S, 105) contient un moyen pour calculer le temps de décompression de l'objet sur l'équipement utilisateur (UE, 101) en se basant sur les informations sur le type et les capacités de décompression de l'équipement utilisateur (UE, 101).
